# FASCICULE DE BREVET EUROPEEN

(11) **EP 2 379 344 B1**
(45) Date de publication et mention de la délivrance du brevet: **17.10.2012**
(21) Numéro de dépôt: 09771349.9
(22) Date de dépôt: 09.12.2009
(51) Int. Cl.: B60C 9/02

(54) **PNEUMATIQUE POUR VEHICULES COMPORTANT UNE BANDE DE ROULEMENT CONSTITUEE DE PLUSIEURS MELANGES ET UNE COUCHE D'ELEMENTS DE RENFORCEMENT CIRCONFERENTIELS A PAS VARIABLE**
FAHRZEUGREIFEN MIT EINEM AUS MEHREREN VERBINDUNGEN UND EINER LAGE AUS UMFANGSVERSTÄRKUNGSELEMENTEN MIT VARIABLEM ABSTAND BESTEHENDEN PROFIL
VEHICLE TYRE COMPRISING A TREAD COMPOSED OF A PLURALITY OF COMPOUNDS AND A LAYER OF CIRCUMFERENTIAL REINFORCEMENT ELEMENTS OF VARIABLE PITCH

(30) Priorité: 17.12.2008 FR 0858727
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BORDOZ, Francis, 63100 Clermont-Ferrand (FR); VALLE, Alain, 63118 Cebazat (FR); PROST, Pascal, 63200 Riom (FR)
(74) Mandataire: Le Cam, Stéphane Georges Elie
(86) Numéro de dépôt international: PCT/EP2009/066738
(87) Numéro de publication internationale: WO 2010/069840

(56) Documents cités:
- EP-A- 1 800 906
- EP-A- 1 852 277
- EP-A- 1 950 059
- WO-A-2004/018236
- FR-A- 2 886 215
- US-A1- 2003 155 056

## Description

L'invention concerne un pneumatique destiné à équiper un véhicule et plus particulièrement destiné à équiper un véhicule à deux roues tel qu'une motocyclette.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien contient l'axe de rotation du pneumatique.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée d'éléments de renforcement. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement sensiblement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique. Le document FR-A-2 886 215 décrit les caractéristiques techniques du préambule de la revendication 1.

L'invention a pour but de fournir un pneumatique permettant d'améliorer les propriétés d'usure du pneumatique et d'améliorer des propriétés d'adhérence de la bande de roulement dudit pneumatique, dans le cas de pneumatiques pour motocyclette.

Ce but a été atteint selon l'invention par un pneumatique comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, et comportant sous la bande de roulement une structure de renforcement de sommet constituée d'au moins une couche d'éléments de renforcement, au moins la surface de la bande de roulement étant constituée d'un premier mélange polymérique s'étendant au moins dans la zone du plan équatorial et d'au moins un deuxième mélange polymérique présentant des propriétés physico-chimique différentes de celles dudit premier mélange polymérique, la structure de renforcement de sommet comportant au moins une couche d'éléments de renforcement circonférentiels répartis selon la direction transversale avec un pas variable et le pas entre les éléments de renforcement circonférentiels étant minimum dans la zone de la couche d'éléments de renforcement circonférentiels radialement en regard des extrémités du premier mélange.

Une couche d'éléments de renforcement circonférentiels au sens de l'invention est constituée d'au moins un élément de renforcement orienté selon un angle formé avec la direction longitudinale inférieur à 5°.

La variation du pas entre les éléments de renforcement circonférentiels se traduit par une variation du nombre d'éléments de renforcement circonférentiels par unité de longueur selon la direction transversale et en conséquence par une variation de la densité d'éléments de renforcement circonférentiels selon la direction transversale et donc par une variation de la rigidité circonférentielle selon la direction transversale.

La bande de roulement du pneumatique selon l'invention est donc constituée au moins en surface d'une partie ou bande circonférentielle centrale constituée d'un premier mélange polymérique et d'au moins deux parties ou bandes latérales d'un autre mélange polymérique. Les bandes latérales sont avantageusement identiques pour réaliser un pneumatique symétrique mais peuvent selon certaines réalisations être constituées de mélanges différents. La partie ou bande circonférentielle centrale s'étend axialement, conformément à l'invention, sur une zone comprenant le plan équatorial.

Selon un mode de réalisation avantageux de l'invention, afin de conférer des propriétés symétriques au pneumatique, la bande circonférentielle centrale est avantageusement centrée sur le plan équatorial. Selon d'autres modes de réalisations, destinés par exemple à des pneumatiques devant rouler sur un circuit comportant des virages essentiellement dans la même direction, la bande circonférentielle centrale peut ne pas être centrée sur le plan équatorial.

Des variantes avantageuses de l'invention peuvent prévoir la présence de cinq bandes circonférentielles ou plus pour former au moins la surface de la bande de roulement et ainsi conférer une évolution graduelle des propriétés de ladite bande de roulement depuis le plan équatorial vers les épaules. De même que précédemment, une telle réalisation peut être symétrique par rapport au plan équatorial ou non, la répartition des bandes différent soit par leur composition soit par leur répartition par rapport au plan équatorial.

Une variante avantageuse de l'invention prévoit encore, dans le cas notamment d'au moins cinq bandes circonférentielles formant au moins la surface de la bande de roulement, une répartition desdites bandes circonférentielles telle que les propriétés des bandes circonférentielles radialement extérieures et en regard des extrémités des demi-couches formant la structure de carcasse soit différentes de celles des autres bandes circonférentielles de sorte que la variation ne soit pas graduelle depuis le sommet vers les épaules. En d'autres termes, les bandes circonférentielles radialement extérieures et en regard des extrémités des demi-couches présentent par exemple des propriétés supérieures ou inférieures à celles des autres bandes circonférentielles couvrant les parties axialement extérieures et la partie centrale de la bande de roulement.

Selon un mode de réalisation préféré de l'invention, le deuxième mélange polymérique est d'une composition différente de celle du premier mélange polymérique et de préférence encore, le deuxième mélange polymérique présente des propriétés d'adhérence supérieures à celles dudit premier mélange polymérique.

Selon d'autres modes de réalisations, des propriétés différentes peuvent être obtenues avec des mélanges identiques par des conditions de vulcanisation différentes.

Selon l'invention, le deuxième mélange polymérique présente une dureté Shore A différente de celle du premier mélange polymérique.

La dureté Shore A des mélanges polymériques après cuisson est appréciée conformément à la norme ASTM D 2240-86.

D'autres propriétés du deuxième mélange polymérique peuvent être différentes. Il peut par exemple s'agir de la couleur qui peut apporter un effet fonctionnel et/ou esthétique.

En outre, la structure de renforcement de sommet du pneumatique selon l'invention comporte au moins une couche d'éléments de renforcement circonférentiels répartis selon la direction transversale avec un pas variable, le pas entre les éléments de renforcement circonférentiels étant minimum dans la zone de la couche d'éléments de renforcement circonférentiels radialement en regard des extrémités du premier mélange. En d'autres termes, la densité d'éléments de renforcement circonférentiels est plus importantes en regard des extrémités du premier mélange et donc la densité des éléments de renforcement circonférentiels augmente depuis une extrémité de ladite couche d'éléments de renforcement circonférentiels jusqu'à la zone en regard d'une extrémité du premier mélange puis décroît de ladite zone jusqu'au sommet du pneumatique.

Selon un premier mode de réalisation de l'invention, le pas entre les éléments de renforcement circonférentiels au centre (sommet) de la bande de roulement est moins important qu'aux bords de ladite couche. Une telle réalisation selon l'invention favorise notamment une résistance aux agressions extérieures qui sont plus importantes dans la zone centrale du pneumatique.

Selon un second mode de réalisation de l'invention, le pas entre les éléments de renforcement circonférentiels au centre (sommet) de la bande de roulement est plus important qu'aux bords de ladite couche. Une telle réalisation selon l'invention favorise notamment la mise à plat du pneumatique à fort carrossage.

Selon une réalisation préférée de l'invention, la valeur du pas selon la direction transversale obéit à une suite sur au moins une partie de la largeur axiale de ladite couche.

Selon un premier mode de réalisation, la valeur du pas obéit à une suite arithmétique de type U(n) = Uo + nr, avec Uo compris entre 0,4 mm et 2,5 mm, et r, la raison de la suite compris entre 0,001 et 0,1.

Selon un deuxième mode de réalisation, la valeur du pas obéit à une suite géométrique de type U(n) = Uo x rn, avec Uo compris entre 0,4 mm et 2,5 mm, et r, la raison de la suite compris entre 1,001 et 1,025.

Selon d'autres modes de réalisation de l'invention, la valeur du pas peut être une combinaison de plusieurs suites en fonction de la position axiale sur ladite couche.

Un pneumatique ainsi réalisé selon l'invention permet d'améliorer les performances en termes notamment d'usure et d'adhérence du fait des choix faits concernant les mélanges polymériques constituants la bande de roulement et de la présence d'au moins une couche d'éléments de renforcement circonférentiels dont la densité est maximum dans la zone de la couche d'éléments de renforcement circonférentiels radialement en regard des extrémités du premier mélange. La densité maximum des éléments de renforcement orientés circonférentiellement dans la zone radialement en regard des extrémités du premier mélange favorise notamment la reprise des efforts aux extrémités du premier mélange et donc à la jonction des deux mélanges et contribue à l'amélioration des performances du pneumatique.

Une réalisation avantageuse de l'invention prévoit que la couche d'éléments de renforcement circonférentiels est positionnée au moins partiellement radialement à l'extérieur d'une couche de travail. Lorsque la couche d'éléments de renforcement circonférentiels est réalisée radialement à l'extérieur de deux couches de travail et placée directement sous la bande de roulement, elle peut notamment contribuer à l'amélioration de la stabilité à haute vitesse.

La couche d'éléments de renforcement circonférentiels peut ainsi être réalisée directement sous la bande de roulement pour former outre sa fonction première une couche de protection de la carcasse et des autres couches de la structure de renforcement de sommet, contre des agressions mécaniques éventuelles.

La couche d'éléments de renforcement circonférentiels peut encore être réalisée entre les couches de travail, notamment par souci économique, la quantité de matière et le temps de pose étant ainsi diminués.

Une autre réalisation avantageuse de l'invention prévoit que la couche d'éléments de renforcement circonférentiels est positionnée au moins partiellement radialement à l'intérieur de la couche de travail radialement la plus à l'intérieure. Selon cette réalisation, la couche d'éléments de renforcement circonférentiels est réalisée radialement à l'intérieur des couches de travail et peut notamment permettre d'améliorer encore l'adhérence et la motricité du pneumatique.

Une autre variante de l'invention prévoit qu'au moins une couche d'éléments de renforcement circonférentiels est positionnée au moins partiellement radialement à l'intérieur de la structure de renfort de type carcasse.

Un pneumatique selon l'invention, notamment lorsqu'au moins une partie de la structure de renforcement de sommet, telle qu'une couche d'éléments de renforcement circonférentiels, est réalisée radialement à l'intérieur de la structure de carcasse, est avantageusement réalisé selon une technique de fabrication du type sur noyau dur ou forme rigide.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

Avantageusement encore, les épaisseurs radiales des premier et deuxième mélanges polymériques peuvent être différentes, de façon à optimiser axialement l'usure de la bande de roulement. Avantageusement encore les épaisseurs varient graduellement.

Dans une variante avantageuse de l'invention, une couche d'éléments de renforcement circonférentiels peut être réalisée en plusieurs parties mises en place en différentes positions radiales ou différents niveaux du pneumatique. Un tel pneumatique peut notamment comporter une partie de la couche d'éléments de renforcement circonférentiels radialement à l'extérieur des autres éléments de renforcement dans la partie centrale du pneumatique, c'est-à-dire sous la partie centrale de la bande de roulement. Cette partie de la couche d'éléments de renforcement circonférentiels permet alors notamment une protection de la carcasse contre d'éventuelles agressions pouvant intervenir par la partie centrale de la bande de roulement, considérée comme la plus exposée. Des parties latérales de la couche d'éléments de renforcement circonférentiels, indépendantes de la partie centrale de ladite couche d'éléments de renforcement circonférentiels, peuvent être positionnées à tous niveaux, c'est-à-dire soit radialement à l'intérieur des couches de travail soit entre-elles soit encore radialement à l'intérieur de la couche de carcasse, notamment en vue de diminuer la quantité d'éléments de renforcement et le temps de réalisation d'une telle couche d'éléments de renforcement circonférentiels. L'invention prévoit encore, dans le cas d'une couche d'éléments de renforcement circonférentiels réalisée en plusieurs parties mises en place en différentes positions radiales, que la répartition de ces différentes parties ne soit pas réalisée de manière symétrique par rapport au plan équatorial, ou plan circonférentiel passant par le centre du sommet du pneumatique. Une telle répartition non symétrique peut en outre être liée à un choix de matériaux différents des éléments de renforcement circonférentiels.

Conformément à ce type de réalisation d'une couche d'éléments de renforcement circonférentiels fractionnée en plusieurs parties, l'invention prévoit avantageusement un recouvrement des extrémités axiales desdites parties entre-elles.

Selon un mode de réalisation préféré de l'invention, les éléments de renforcement de la structure de renfort de type carcasse font avec la direction circonférentielle un angle compris entre 65° et 90°.

Selon une variante de l'invention, la structure de renforcement de sommet comporte au moins deux couches d'éléments de renforcement, les tronçons formant entre eux des angles compris entre 20 et 160°, d'une couche à la suivante, et de préférence supérieurs à 40°.

Selon un mode de réalisation préféré selon cette variante de l'invention, au moins dans la zone centrale de la bande de roulement, les éléments de renforcements d'une couche de travail présentent des angles, formés avec la direction longitudinale, identiques, lesdits angles étant mesurés aux points d'intersections avec un plan circonférentiel, quel que soit ledit plan circonférentiel. En d'autres termes, pour un plan circonférentiel de coupe donné, les éléments de renforcement présentent tous le même angle formé avec la direction longitudinale aux points d'intersections avec ledit plan circonférentiel de coupe. Par ailleurs, l'angle précité peut varier selon le plan circonférentiel de coupe considéré.

De préférence encore selon cette variante de l'invention, au moins dans la zone centrale de la bande de roulement, les éléments de renforcement d'une couche de travail sont équidistants les uns des autres selon tous plans circonférentiels; la distance séparant des éléments de renforcement adjacents pouvant quant à elle varier selon le plan circonférentiel de coupe considéré, ou plus précisément, la distance entre des éléments de renforcement adjacents pouvant varier selon la direction axiale.

Une autre variante de réalisation de l'invention prévoit qu'au moins une couche de travail est réalisée au moins partiellement radialement à l'intérieur de la structure de renfort de type carcasse.

Selon un premier mode de réalisation de l'invention, l'ensemble des couches de travail est réalisé radialement à l'intérieur d'au moins une structure de carcasse, c'est-à-dire à l'intérieur d'au moins une couche de carcasse. Au moins une structure de renfort de type carcasse couvre ainsi radialement la structure complète de renforcement de sommet.

Selon un second mode de réalisation préféré de l'invention, au moins une couche d'éléments de renforcement de travail de la structure de renforcement de sommet est réalisée radialement à l'extérieur de la structure de renfort de type carcasse. Selon ce second mode de réalisation de l'invention, la couche d'éléments de renforcement de travail assume une fonction de protection à l'égard de la carcasse et des autres couches de la structure de renforcement de sommet, contre des agressions mécaniques éventuelles.

Dans une variante avantageuse de l'invention, une couche d'éléments de renforcement de travail peut être réalisée en plusieurs parties mises en place en différentes positions radiales ou différents niveaux du pneumatique. Un tel pneumatique peut notamment comporter une partie de la couche d'éléments de renforcement de travail radialement à l'extérieur des éléments de renforcement de la structure de carcasse dans la partie centrale du pneumatique, c'est-à-dire sous la partie centrale de la bande de roulement. Cette partie de la couche d'éléments de renforcement de travail permet alors notamment une protection de la carcasse contre d'éventuelles agressions pouvant intervenir par la partie centrale de la bande de roulement, considérée comme la plus exposée. L'invention prévoit encore, dans le cas d'une couche d'éléments de renforcement de travail réalisée en plusieurs parties mises en place en différentes positions radiales, que la répartition de ces différentes parties ne soit pas réalisée de manière symétrique par rapport au plan équatorial, ou plan circonférentiel passant par le centre du sommet du pneumatique.

Conformément à ce type de réalisation d'une couche d'éléments de renforcement de travail fractionnée en plusieurs parties, l'invention prévoit avantageusement un recouvrement des extrémités axiales desdites parties entre-elles.

Il faut noter, comme énoncé précédemment, qu'un pneumatique selon l'invention, notamment lorsqu'au moins une partie de la structure de renforcement de sommet est réalisée radialement à l'intérieur de la structure de carcasse, est avantageusement réalisé selon une technique de fabrication du type sur noyau dur ou forme rigide.

Selon une variante de réalisation de l'invention, au moins une couche d'éléments de renforcement de travail est constituée d'au moins un fil continu de renforcement formant dans la zone centrale de ladite couche des tronçons présentant des angles, formés avec la direction longitudinale, identiques, lesdits angles étant mesurés aux points d'intersections avec un plan circonférentiel, deux tronçons adjacents étant liés par une boucle, et les tronçons formant un angle avec la direction longitudinale compris entre 10 et 80°, et de préférence supérieur à 20°.

Le terme « fil » désigne en toute généralité, aussi bien des mono-filaments, des fibres multifilamentaires (éventuellement tordues sur elles-mêmes) ou des assemblages comme des câbles textiles ou métalliques, des retors ou bien encore n'importe quel type d'assemblage équivalent, comme par exemple, un câble hybride, et ceci, quelle que soient la ou les matières, le traitement éventuel de ces fils, par exemple un traitement de surface ou enrobage, ou préencollage, pour favoriser l'adhésion sur le caoutchouc ou toute autre matière.

Selon cette variante avantageuse de l'invention, la couche de travail est réalisée avec au moins un fil dont aucune extrémité libre n'est présente sur les bords de ladite couche. De préférence, la réalisation de la couche est faite avec un seul fil et la couche est du type « mono-fil ». Toutefois, la réalisation industrielle de telles couches conduit à des discontinuités notamment dues à des changements de bobine. Une réalisation préférée de l'invention consiste encore à n'utiliser qu'un seul ou un faible nombre de fils pour une couche de travail et il convient de disposer les débuts et fins de fils dans la zone centrale de ladite couche.

Un pneumatique selon l'invention ainsi réalisé comporte une structure de renforcement qui ne présente aucune extrémité libre des éléments de renforcement au niveau des bords axialement extérieurs des couches de travail.

Les études réalisées ont notamment mis en évidence que la présence de couches usuelles d'éléments de renforcement présentant un angle avec la direction longitudinale conduit à des rigidités locales, circonférentielles et de cisaillement, qui diminuent à l'approche des bords desdites couches, la tension aux extrémités des éléments de renforcement étant nulle. Une tension locale nulle des éléments de renforcement se traduit par une moindre efficacité desdits éléments de renforcement dans cette zone. Or, les rigidités des bords des couches sont particulièrement importantes lorsque le pneumatique est utilisé dans les plus forts carrossages, en courbe, la partie du pneumatique correspondant à ces zones se trouvant alors en regard du sol.

La réalisation de pneumatiques pour motocyclettes conduit à des valeurs de courbures importantes pour une utilisation desdits pneumatiques en carrossage. Un pneumatique réalisé selon cette variante de l'invention et qui comporte une structure de renforcement qui ne présente aucune extrémité libre des éléments de renforcement au niveau des bords axialement extérieurs des couches de travail, permet ainsi notamment de renforcer les propriétés d'adhérence et de motricité des pneumatiques pour une utilisation en fort carrossage.

Un tel pneumatique est avantageusement réalisé selon une technique du type sur noyau dur ou toroïdal qui autorise notamment la mise en place des éléments de renforcement dans la position quasi-finale ; en effet, une étape de conformation n'étant pas requise selon ce type de procédé les éléments de renforcement ne sont plus déplacés après leur mise en place.

Dans une réalisation avantageuse de l'invention, notamment pour optimiser encore les rigidités de la structure de renforcement le long du méridien du pneumatique, et en particulier aux bords des couches de travail, les angles formés par lesdits tronçons du fil des couches de travail avec la direction longitudinale sont variables selon la direction transversale tels que lesdits angles sont supérieurs sur les bords axialement extérieurs des couches d'éléments de renforcement par rapport aux angles desdits tronçons mesurés au niveau du plan équatorial du pneumatique.

L'utilisation d'une technique du type sur noyau dur qui autorise notamment la mise en place des éléments de renforcement dans la position quasi-finale sans nécessiter d'étape de conformation présente encore des avantages. En effet, une technique du type sur noyau dur autorise notamment de manière simple des variations d'angles nettement supérieures à ce qu'il est possible d'obtenir selon des procédés comportant une étape de conformation. En outre, lesdites variations d'angle, ledit angle tendant vers 90° aux bords des couches de travail, conduit à une augmentation du pas et favorise la réalisation des boucles, du fait de la réduction de l'encombrement.

Un premier mode de réalisation des variantes de réalisation de l'invention selon lesquelles les angles formés par lesdits tronçons du fil des couches de travail avec la direction longitudinale sont variables selon la direction transversale, consiste à faire varier l'angle des tronçons d'une manière monotone depuis le plan équatorial du pneumatique jusqu'aux bords de la couche de travail.

Un second mode de réalisation de ces variantes consiste à faire évoluer l'angle par palier depuis le plan équatorial du pneumatique jusqu'aux bords de la couche de travail.

Un dernier mode de réalisation de ces variantes consiste en une évolution de l'angle telle que des valeurs données soient obtenues pour des positions axiales données.

Ces différents modes de réalisation des variantes de réalisation de l'invention selon lesquelles les angles formés par lesdits tronçons du fil des couches de travail avec la direction longitudinale sont variables selon la direction transversale permettent en d'autres termes, d'obtenir une forte rigidité circonférentielle de la structure de renforcement du sommet par la présence d'angles fermés, c'est-à-dire faibles, dans la zone du sommet du pneu, c'est-à-dire dans la zone encadrant le plan équatorial. Et au contraire la présence d'angles ouverts, c'est-à-dire d'angles tendant vers 45°, voir au-delà vers 90°, peut être obtenue sur les bords de la couche de travail ou plus exactement au niveau des épaules du pneumatique pour améliorer l'adhérence, la motricité, le confort, ou encore la température de fonctionnement du pneumatique ; en effet, de telles variations d'angles permettent de moduler les rigidités de cisaillement des couches de travail.

Selon une réalisation préférée de l'invention, les éléments de renforcement des couches de travail sont en matériau textile.

Selon un autre mode de réalisation de l'invention, les éléments de renforcement des couches de travail sont en métal.

D'autres détails et caractéristiques avantageux de l'invention ressortiront ci-après de la description des exemples de réalisation de l'invention en référence aux figures 1 à 3 qui représentent :
- figure 1, une vue méridienne d'un schéma d'un pneumatique selon un premier mode de réalisation de l'invention,
- figure 2, une vue méridienne d'un schéma d'un pneumatique selon un deuxième mode de réalisation de l'invention,
- figure 3, une vue méridienne d'un schéma d'un pneumatique selon un troisième mode de réalisation de l'invention.

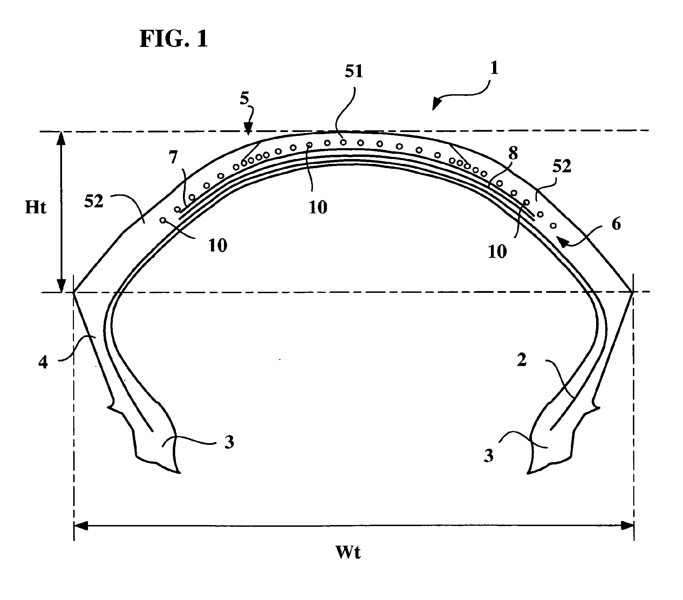

Les figures 1 à 3 ne sont pas représentées à l'échelle pour en simplifier la compréhension.

La figure 1 représente un pneumatique 1 comprenant une armature de carcasse constituée d'une couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

La couche 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte encore une armature de sommet 6 constituée de deux couches 7 et 8 d'éléments de renforcement faisant des angles avec la direction circonférentielle, lesdits éléments de renforcement étant croisés d'une couche à la suivante en faisant entre eux des angles égaux à 50° dans la zone du plan équatorial, les éléments de renforcement de chacune des couches 7 et 8 formant un angle égal à 25° avec la direction circonférentiel.

Les éléments de renforcement des deux couches 7 et 8 sont en matériau textile et plus précisément en aramide.

L'armature de sommet 6 comporte, conformément à l'invention, une couche d'éléments de renforcement circonférentiels 10 radialement à l'extérieur des couches 7, 8. La couche d'éléments de renforcement circonférentiels 10 est ainsi la partie de l'armature de sommet 6 radialement extérieure et les deux couches de travail 7, 8 sont intercalées entre la couche de carcasse 2 et la couche d'éléments de renforcement circonférentiels 10. La couche d'éléments de renforcement circonférentiels 10 est avantageusement constituée d'un seul fil enroulé pour former un angle avec la direction longitudinale sensiblement égal à 0°. La couche d'éléments de renforcement circonférentiels 10 peut encore être réalisée par l'enroulement simultané de plusieurs fils nus ou sous forme de bandelettes lorsqu'ils sont noyés dans du caoutchouc.

L'enroulement des éléments de renforcement circonférentiels 10 est réalisé de sorte que le pas entre deux éléments de renforcement circonférentiels varie selon la direction axiale.

Cette variation du pas de pose conduit à une variation de la densité d'éléments de renforcement circonférentiels telle que la densité soit plus importante dans la zone en regard des extrémités du premier mélange. Les densités d'éléments de renforcement circonférentiels vont donc en diminuant d'une part, depuis ces zones avec une valeur de 85 fils /dm vers la partie centrale du pneumatique avec une valeur de 60 fils/dm et, d'autre part, depuis ces zones vers les parties latérales de ladite couche d'éléments de renforcement circonférentiels 10 avec une valeur de 70 fils /dm.

La présence de la couche d'éléments de renforcement circonférentiels dans le pneumatique contribue d'une part à l'amélioration des performances en termes d'endurance et d'autre part, la répartition avec un pas variable autorise une modulation des rigidités circonférentielles de l'armature sommet du pneumatique afin d'optimiser les compromis entre la mise à plat, l'usure et la tenue à la vitesse du pneumatique.

La couche d'éléments de renforcement circonférentiels 10 est constituée de renforts textiles de type aramide 167/3.

La bande de roulement 5 est constituée, conformément à l'invention, d'un premier mélange de caoutchouc 51 dans sa partie centrale et d'un deuxième mélange de caoutchouc 52 dans les parties latérales. Les jonctions entre les parties 51 et 52 formant la bande de roulement 5 sont avantageusement réalisées de manière progressive avec une interface en biseau, l'angle du biseau étant compris entre 20 et 60° par rapport au à la surface extérieure de la bande de roulement 5 du pneumatique 1.

Le mélange de caoutchouc 52 est avantageusement choisi de sorte que ses propriétés d'adhérence sont supérieures à celles du mélange de caoutchouc 51, ledit mélange de caoutchouc 51 étant plus particulièrement choisi pour sa résistance à l'usure. La bande de roulement ainsi réalisé peut permettre de définir un compromis résistance à l'usure / adhérence favorable par rapport à ce qu'il est possible d'obtenir avec un seul mélange de caoutchouc.

La combinaison d'une bande de roulement constituée de plusieurs mélanges conformément au pneumatique 1 et d'une couche d'éléments de renforcement circonférentiels répartis selon la direction transversale avec un pas variable, le pas entre les éléments de renforcement circonférentiels étant minimum dans la zone de la couche d'éléments de renforcement circonférentiels radialement en regard des extrémités du premier mélange permet d'améliorer les performances en adhérence, en usure et en passage de couple lorsque le pneumatique est monté sur une motocyclette.

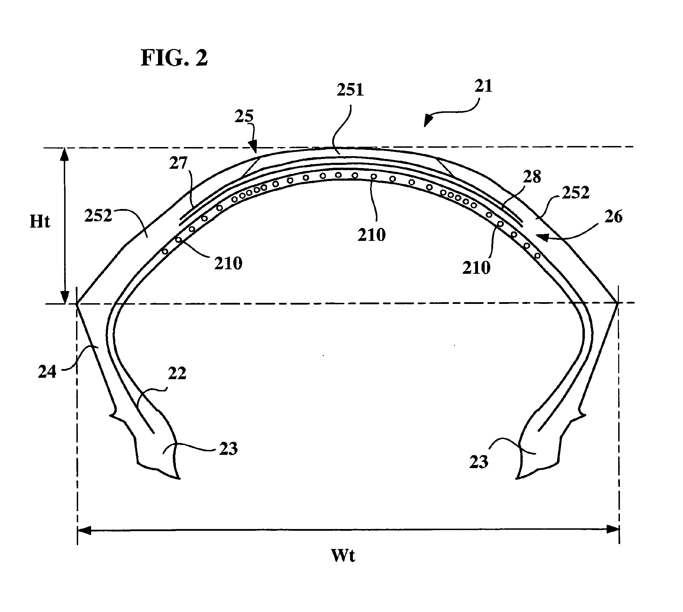

Sur la figure 2, est représenté un pneumatique 21 semblable à celui de la figure 1 et qui en diffère par la position radiale de la couche d'éléments de renforcement circonférentiels 210. Sur cette deuxième représentation conforme à l'invention, la couche d'éléments de renforcement circonférentiels 210 a été mise en place radialement à l'intérieur de l'armature de carcasse 2 et donc radialement à l'intérieur des deux couches de travail 27, 28. Cette position radiale de la couche d'éléments de renforcement circonférentiels 210 permet notamment d'améliorer encore les propriétés d'adhérence et de motricité du pneumatique.

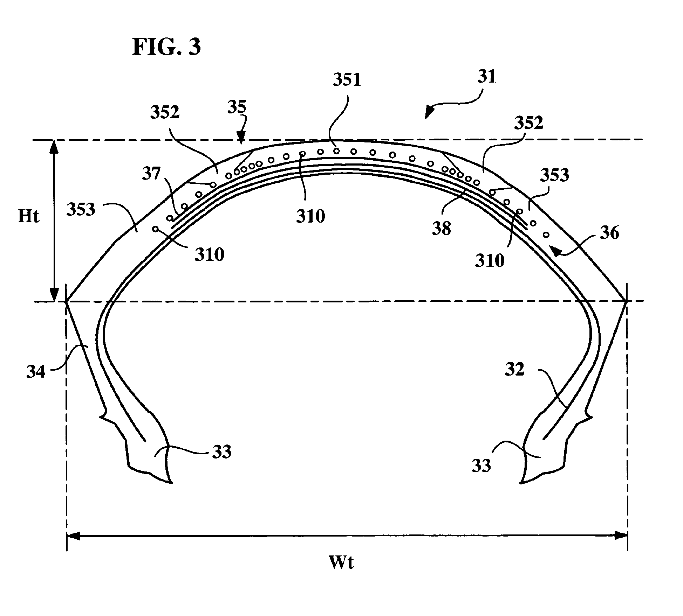

Sur la figure 3, est représenté un pneumatique 31 semblable à celui de la figure 1 et qui en diffère par une bande de roulement constituée de trois mélanges de caoutchouc 351, 352, 353 formant cinq bandes circonférentielles.

Conformément à une telle réalisation de l'invention, les mélanges de caoutchouc 351, 352, 353 sont présentent des propriétés physico-chimique différentes. Selon un premier type de réalisation, ils sont mises en place de façon à présenter un gradient de variation d'une propriété depuis le sommet jusqu'aux épaules du pneumatique 31. Selon un autre mode de réalisation, le mélange de caoutchouc 352 présente une propriété, par exemple sa dureté, supérieure à celles des autres mélanges 351, 353, celles-ci pouvant ou non être identiques.

L'invention ne doit pas être comprise comme étant limitée à la description des exemples ci-dessus. Elle prévoit notamment de combiner les différents modes de réalisations de l'invention illustrés sur les figures 2 et 3.

L'invention s'étend encore notamment à des pneumatiques pouvant comporter des armatures de sommet plus complexes comportant par exemple trois, ou plus, couches de travail d'éléments de renforcement faisant un angle avec la direction circonférentielle.

L'invention s'applique également aux différents cas d'armature de sommet énoncés précédemment et notamment décrits dans les demandes de brevet WO 2004/018236, WO 2004/018237, WO 2005/070704, WO 2005/070706, présentant notamment les différentes positions radiales des couches constituant l'armature de sommet les unes par rapport aux autres, ainsi que leur position radiale par rapport à la structure de carcasse, ainsi encore que la constitution d'une couche formée par un fil constituant des tronçons liés par des boucles ou encore la variation des angles desdits tronçons selon la direction axiale.

## Revendications

1. - Pneumatique (1) comportant une structure de renfort de type carcasse (2) formée d'éléments de renforcement, ancrée de chaque côté du pneumatique à un bourrelet (3), dont la base est destinée à être montée sur un siège de jante, chaque bourrelets prolongeant radialement vers l'extérieur par un flanc (4), les flancs (4) rejoignant radialement vers l'extérieur une bande de roulement (5), et comportant sous la bande de roulement (5) une structure de renforcement de sommet (6) constituée d'au moins une couche d'éléments de renforcement, où **en ce qu'**au moins la surface de la bande de roulement (5) est constituée d'un premier mélange polymérique (51) s'étendant au moins dans la zone du plan équatorial et d'au moins un deuxième mélange polymérique (52) présentant des propriétés physico-chimique différentes de celles dudit premier mélange polymérique (51), **caractérisé en ce que** la structure de renforcement de sommet (6), comporte au moins une couche d'éléments de renforcement circonférentiels (10) répartis selon la direction transversale avec un pas variable et **en ce que** le pas entre les éléments de renforcement circonférentiels (10) est minimum dans la zone de la couche d'éléments de renforcement circonférentiels radialement en regard des extrémités de la zone du premier mélange (51).

2. - Pneumatique (1) selon la revendication 1, **caractérisé en ce que** le deuxième mélange polymérique (52) est d'une composition différente de celle du premier mélange polymérique (51).

3. - Pneumatique (1) selon l'une des revendications 1 ou 2, **caractérisé en ce que** le deuxième mélange polymérique (52) présente des propriétés d'adhérence supérieures à celles dudit premier mélange polymériqué (51).

4. - Pneumatique (1) selon l'une des revendications 1 à 3, **caractérisé en ce que** le deuxième mélange polymérique (52) présente une dureté Shore A différente de celle du premier mélange polymériqu (51).

5. **-** Pneumatique (1) selon l'une des revendications précédentes, **caractérisé en ce que** le pas entre les éléments de renforcement circonférentiels (10) au centre de la bande de roulement (5) est plus important qu'aux bords de la couche d'éléments de renforcement circonférentiels (10).

6. **-** Pneumatique (1) selon l'une des revendications 1 à 4, **caractérisé en ce que** le pas entre les éléments de renforcement circonférentiels (10) au centre de la bande de roulement (5) est moins important qu'aux bords de la couche d'éléments de renforcement circonférentiels (10).

7. - Pneumatique (1) selon l'une des revendications précédentes, **caractérisé en ce que** les éléments de renforcement de la structure de renfort de type carcasse (2) font avec la direction circonférentielle un angle compris entre 65° et 90°.

8. **-** Pneumatique (1) selon l'une des revendications précédentes, **caractérisé en ce que la** structure de renforcement de sommet (6) comporte au moins deux couches d'éléments (7,8) de renforcement et **en ce que** d'une couche à la suivante les tronçons forment entre eux des angles compris entre 20 et 160°.

9. **-** Utilisation d'un pneumatique (1) tel que décrit selon l'une des revendications 1 à 8 pour un véhicule motorisé à deux roues tel qu'une motocyclette.

## Claims

1. - Tyre (1) comprising a reinforcing structure of the carcass type (2), formed of reinforcing elements anchored on each side of the tyre to a bead (3) the base of which is intended to be mounted on a rim seat, each bead (3) being extended radially outwards by a sidewall (4), the sidewalls (4) being joined radially towards the outside to a tread (5), and comprising under the tread (5) a crown reinforcing structure (6) consisting of at least one layer of reinforcing elements, where at least the surface of the tread (5) consists of a first polymer compound (51) extending at least into the region of the equatorial plane and of at least one second polymer compound (52) having physicochemical properties that differ from those of the said first polymer compound (51), **characterized in that** the crown reinforcing structure (6) comprises at least one layer of circumferential reinforcing elements (10) which are distributed in the transverse direction with a variable pitch and **in that** the pitch between the circumferential reinforcing elements (10) is at a minimum in the region of the layer of circumferential reinforcing elements that radially face the ends of the region of the first compound (51).

2. **-** Tyre (1) according to Claim 1, **characterized in that** the second polymer compound (52) is of a composition that differs from that of the first polymer compound (51).

3. **-** Tyre (1) according to one of Claims 1 and 2, **characterized in that** the second polymer compound (52) has grip properties that are superior to those of the said first polymer compound (51).

4. **-** Tyre (1) according to one of Claims 1 to 3, **characterized in that** the second polymer compound (52) has a Shore A hardness that differs from that of the first polymer compound (51).

5. **-** Tyre (1) according to one of the preceding claims, **characterized in that** the pitch between the circumferential reinforcing elements (10) at the centre of the tread (5) is greater than at the edges of the layer of circumferential reinforcing elements (10).

6. **-** Tyre (1) according to one of Claims 1 to 4, **characterized in that** the pitch between the circumferential reinforcing elements (10) at the centre of the tread (5) is less than at the edges of the layer of circumferential reinforcing elements (10).

7. **-** Tyre (1) according to one of the preceding claims, **characterized in that** the reinforcing elements of the carcass-type reinforcing structure (2) make an angle comprised between 65° and 90° with the circumferential direction.

8. **-** Tyre (1) according to one of the preceding claims, **characterized in that** the crown reinforcing structure (6) comprises at least two layers of reinforcing elements (7, 8), and **in that** from one layer to the next, the portions make angles comprised between 20 and 160° with one another.

9. **-** Use of a tyre (1) as described in one of claims 1 to 8 for a motorised two-wheel vehicle such as a motorcycle

## Patentansprüche

1. Luftreifen (1), der eine Verstärkungsstruktur von der Art Karkasse (2) aufweist, die aus Verstärkungselementen geformt ist, auf jeder Seite des Luftreifens an einem Wulst (3) verankert ist, dessen Basis dazu bestimmt ist, auf einen Felgensitz montiert zu werden, wobei jeder Wulst (3) sich radial nach außen durch eine Flanke (4) verlängert, wobei die Flanken (4) sich radial nach außen mit einem Laufstreifen (5) vereinigen, und unter dem Laufstreifen (5) eine Scheitelverstärkungsstruktur (6) aufweist, die aus mindestens einer Schicht aus Verstärkungselementen besteht, wobei mindestens die Fläche des Laufstreifens (5) aus einer ersten Polymermischung (51), die sich mindestens in der Zone der Äquatorialebene erstreckt, und mindestens einer zweiten Polymermischung (52) besteht, die andere physikalisch-chemische Eigenschaften hat als diejenigen der ersten Polymermischung (51), **dadurch gekennzeichnet, dass** die Scheitelverstärkungsstruktur (6) mindestens eine Schicht von Umfangsverstärkungselementen (10) aufweist, die gemäß der Querrichtung mit einem variablen Abstand verteilt sind, und dass der Abstand zwischen den Umfangsverstärkungselementen (10) in der Zone der Schicht von Umfangsverstärkungselementen radial gegenüber den Enden der Zone der ersten Mischung (51) minimal ist.

2. Luftreifen (1) nach Anspruch 1, **dadurch gekennzeichnet, dass** die zweite Polymermischung (52) eine andere Zusammensetzung hat als diejenige der ersten Polymermischung (51).

3. Luftreifen (1) nach einem der Ansprüche 1 oder 2, **dadurch gekennzeichnet, dass** die zweite Polymermischung (52) höhere Haftungseigenschaften hat als diejenigen der ersten Polymermischung (51).

4. Luftreifen (1) nach einem der Ansprüche 1 bis 3, **dadurch gekennzeichnet, dass** die zweite Polymermischung (52) eine andere Shore A Härte hat als diejenige der ersten Polymermischung(51).

5. Luftreifen (1) nach einem der vorhergehenden Ansprüche, **dadurch gekennzeichnet, dass** der Abstand zwischen den Umfangsverstärkungselementen (10) in der Mitte des Laufstreifens (5) größer ist als an den Rändern der Schicht von Umfangsverstärkungselementen (10).

6. Luftreifen (1) nach einem der Ansprüche 1 bis 4, **dadurch gekennzeichnet, dass** der Abstand zwischen den Umfangsverstärkungselementen (10) in der Mitte des Laufstreifens (5) kleiner ist als an den Rändern der Schicht von Umfangsverstärkungselementen (10).

7. Luftreifen (1) nach einem der vorhergehenden Ansprüche, **dadurch gekennzeichnet, dass** die Verstärkungselemente der Verstärkungsstruktur von der Art Karkasse (2) mit der Umfangsrichtung einen Winkel zwischen 65° und 90° formen.

8. Luftreifen (1) nach einem der vorhergehenden Ansprüche, **dadurch gekennzeichnet, dass** die Scheitelverstärkungsstruktur (6) mindestens zwei Schichten von Verstärkungselementen (7, 8) aufweist, und dass die Abschnitte von einer Schicht zur nächsten miteinander Winkel zwischen 20 und 160° formen.

9. Verwendung eines Luftreifens (1), wie er in einem der Ansprüche 1 bis 8 beschrieben ist, für ein motorisiertes Zweiradfahrzeug wie ein Motorrad.
